# EUROPÄISCHE PATENTSCHRIFT

(11) **EP 1 807 278 B1**
(45) Veröffentlichungstag und Bekanntmachung des Hinweises auf die Patenterteilung: **21.01.2009**
(21) Anmeldenummer: 05792600.8
(22) Anmeldetag: 13.10.2005
(51) Int. Cl.: B60K 6/48, B60W 20/00, F02D 41/12

(54) **VERFAHREN ZUR STEUERUNG EINES SCHUBBETRIEBS EINES HYBRIDFAHRZEUGS SOWIE HYBRIDFAHRZEUG**
METHOD FOR CONTROLLING DECELERATION OF A HYBRID VEHICLE AND HYBRID VEHICLE
PROCEDE DE COMMANDE D'UN REGIME DE DECELERATION D'UN VEHICULE HYBRIDE ET VEHICULE HYBRIDE

(30) Priorität: 30.10.2004 DE 102004052786
(43) Veröffentlichungstag der Anmeldung: 18.07.2007
(73) Patentinhaber: Volkswagen Aktiengesellschaft, 38436 Wolfsburg (DE); Skoda Auto a.s., 293 60 Mlada Boleslav (CZ)
(72) Erfinder: ZILLMER, Michael, 38173 Sickte (DE); HOLZ, Matthias, 38165 Lehre (DE); POTT, Ekkehard, 38518 Gifhorn (DE); PROCHAZKA, David, 507 45 Libosovice (CZ)
(86) Internationale Anmeldenummer: PCT/EP2005/010987
(87) Internationale Veröffentlichungsnummer: WO 2006/048102

(56) Entgegenhaltungen:
- EP-A- 1 074 417
- US-A- 6 109 237
- US-A1- 2002 134 596
- US-B1- 6 192 847
- US-B1- 6 376 927

## Beschreibung

Die Erfindung betrifft ein Verfahren zur Steuerung eines Schubbetriebs eines Hybridfahrzeugs mit einem Verbrennungsmotor und zusätzlich mindestens einem Elektromotor. Das Fahrzeug weist ferner eine Schubabschaltung auf, die bei Vorliegen eines Schubbetriebs des Fahrzeugs eine Unterbrechung einer Kraftstoffzufuhr des Verbrennungsmotors bewirkt und bei Erreichen oder Unterschreiten einer Wiedereinsetzdrehzahl des Verbrennungsmotors eine Wiedereinsetzung der Kraftstoffzufuhr bewirkt. Die Erfindung betrifft ferner ein Hybridfahrzeug mit einer entsprechenden Schubabschaltungssteuerung.

Der Begriff Hybridfahrzeug bezeichnet Kräftfahrzeuge, bei denen mindestens zwei Antriebseinheiten miteinander kombiniert werden, die auf unterschiedliche Energiequellen zurückgreifen, um die Leistung für den Fahrzeugantrieb bereitzustellen. Besonders vorteilhaft ergänzen sich die Eigenschaften eines Verbrennungsmotors, der durch die Verbrennung von Benzin- oder Dieselkraftstoffen kinetische Energie erzeugt, und einer Elektromaschine, die elektrische Energie in Bewegungsenergie umsetzt, weswegen heutige Hybridfahrzeuge überwiegend mit einer solchen Kombination ausgestattet sind. Es lassen sich zwei verschiedene Hybridkonzepte unterscheiden. Bei den so genannten seriellen oder sequentiellen Hybridkonzepten erfolgt der Fahrzeugantrieb ausschließlich über den Elektromotor, während der Verbrennungsmotor über einen separaten Generator den elektrischen Strom für die Aufladung eines, den E-Motor speisenden Energiespeichers beziehungsweise für die direkte Speisung des Elektromotors erzeugt. Demgegenüber werden heute parallele Hybridkonzepte bevorzugt, bei denen der Fahrzeugantrieb sowohl durch den Verbrennungsmotor als auch durch den E-Motor dargestellt werden kann. In solchen Parallelkonzepten wird etwa der Elektromotor typischerweise in Betriebspunkten mit höheren Fahrzeuglasten unterstützend zum Verbrennungsmotor zugeschaltet.

In Hybridfahrzeugen bietet sich aus Gründen des Kraftstoffverbrauchs an, in den verschiedenen Betriebszuständen des Fahrzeugs jeweils diejenige Antriebsquelle zu verwenden, die im gegebenen Drehzahl-Last-Bereich den besseren Wirkungsgrad aufweist. Dementsprechend wird grundsätzlich angestrebt, den Verbrennungsmotor im Leerlaufbetrieb, in dem dieser einen besonders geringen Wirkungsgrad aufweist, möglichst selten oder auch gar nicht zu betreiben. Hierzu ist bekannt, das Hybridfahrzeug mit einer Start-Stopp-Automatik auszustatten, die eine Abschaltautomatik umfasst, welche bei Vorliegen von Stopp-Bedingungen eine automatische Abschaltung des Verbrennungsmotors bewirkt (beziehungsweise den Wiederstart des Verbrennungsmotors unterdrückt), und eine Anschaltautomatik, welche bei Vorliegen von Start-Bedingungen einen automatischen Start des Verbrennungsmotors bewirkt. Insbesondere wird der Verbrennungsmotor in Stillstandsphasen, das heißt bei einer Fahrzeuggeschwindigkeit von Null, durch die Abschaltautomatik abgestellt. Start-Stopp-Automatiken machen sich den Umstand zu Nutze, dass Hybridfahrzeuge über deutlich leistungsstärkere Elektrostartermotoren verfügen als dies durch konventionelle Anlasser gegeben ist, was insbesondere bei einem Wiederstart nach einem Automatikstopp einen schnellen Motorhochlauf ermöglicht.

Ebenfalls aus Verbrauchgründen arbeiten moderne Verbrennungsmotoren sowohl in konventionellen als auch in Hybridkonzepte bei einer Nullmomentanforderung, das heißt einer Schubsituation, in der ein angefordertes Drehmoment (Fahrerwunschmoment) kleiner als ein aktuell vorliegender Fahrzeugvortrieb ist, üblicherweise mit einer Schubabschaltung. Bei der Schubabschaltung wird oberhalb einer Wiedereinsetzdrehzahl die Kraftstoffzufuhr zum Verbrennungsmotor unterbrochen. Durch diese Maßnahme kann etwa in Verzögerungsphasen, in denen der Fahrer das Fahrpedal entlastet und/oder das Bremspedal betätigt, der Kraftstoffverbrauch abgesenkt werden. Fällt im weiteren Verlauf, beispielsweise nach einem Auskuppelvorgang in der Verzögerungsphase, die Motordrehzahl unterhalb diese Wiedereinsetzdrehzahl, wird die Kraftstoffzufuhr wieder aktiviert, so dass der Motor "abgefangen" wird und anschließend mit seiner Leerlaufdrehzahl weiterlaufen kann. Die Drehzahlreserve zwischen Leerlauf- und Wiedereinsetzdrehzahl wird benötigt, da der Verbrennungsmotor bei fallender Drehzahl gegebenenfalls für das Öffnen der Drosselklappe und zum Aufbau einer Momentenreserve eine gewisse Zeit benötigt, um ein ausreichend hohes Moment aufzubauen und den Drehzahlabfall vor Erreichen der Leerlaufdrehzahl abzufangen. Aus den vorstehend angegebenen Gründen kann die Wiedereinsetzdrehzahl nicht beliebig abgesenkt werden. Sie liegt typischerweise bei mindestens 300 bis 400 min⁻¹ oberhalb der Leerlaufdrehzahl. Ebenso wie die Leerlaufdrehzahl wird auch die Wiedereinsetzdrehzahl motortemperaturabhängig vorgegeben. Beispielsweise liegt eine typische Wiedereinsetzdrehzahl eines betriebswarmen 4-Zylinder-Ottomotors (Kühlmitteltemperatur ca. 85 bis 90°C) bei etwa 1100 min⁻¹ und bei einer Motortemperatur von 20°C bereits bei 1300 min⁻¹. Die Ursachen für die erhöhten Wiedereinsetzdrehzahlen bei niedrigen Motortemperaturen liegen einerseits in höheren Reibungsverlusten aufgrund der zu überwindenden Schleppmomente des Verbrennungsmotors und andererseits in ungünstigeren Brennraumrandbedingungen, die dem Aufbau eines motorischen Drehmoments aufgrund höherer Wärmeverluste und einer geringeren Gemischbildungsgüte entgegenwirken.

Die Merkmale des Oberbegriffes des Anspruches 1 oder 10 sind aus der US2002/134596 A1 bekannt.

Aufgabe der vorliegenden Erfindung ist es, den Schubbetrieb eines Hybridfahrzeugs gegenüber bekannten Konzepten hinsichtlich eines verminderten Kraftstoffverbrauchs zu optimieren.

Diese Aufgabe wird durch ein Verfahren und ein Hybridfahrzeug mit den Merkmalen der unabhängigen Ansprüche 1 und 10 gelöst. Nach dem erfindungsgemäßen Verfahren ist vorgesehen, dass die Schubabschaltung bei Vorliegen eines Schubbetriebs des Fahrzeugs eine Unterbrechung der Kraftstoffzufuhr (und optional auch der Zündung) des Verbrennungsmotors und bei Erreichen oder Unterschreiten einer Wiedereinsetzdrehzahl, die zumindest bei betriebswarmem Verbrennungsmotor bei höchstens 200 min⁻¹ oberhalb der Leerlaufdrehzahl des Verbrennungsmotors liegt, eine Wiedereinsetzung der Kraftstoffzufuhr bewirkt.

Erfindungsgemäß ist somit die Wiedereinsetzdrehzahl gegenüber konventionellen Ausführungen um mindestens 100, insbesondere sogar mindestens 150 und vorzugsweise sogar um mehr als 200 min⁻¹ abgesenkt. Im Ergebnis werden die mit unterbrochener Kraftstoffzufuhr betriebenen Schubphasen verlängert, was eine Einsparung von Kraftstoff zur Folge hat. Dabei macht sich die Erfindung den Umstand zunutze, dass - falls dies erforderlich sein sollte - ein Momenteneingriff des Elektromotors in Anspruch genommen werden kann, um den verbrennungsmotorischen Momentenaufbau zu unterstützen und den Verbrennungsmotor auf seine Leerlaufdrehzahl einzustellen. Hierfür ist insbesondere die Fähigkeit von Elektromotoren von Vorteil, in kürzester Zeit relativ große Drehmomente bereit zu stellen. Beispielsweise kann innerhalb von 50 bis 100 ms ein Drehmoment von 100 Nm aufgebaut werden.

Es ist bevorzugt, die Wiedereinsetzdrehzahl noch weiter abzusenken. So kann besonders vorteilhaft vorgesehen sein, die Kraftstoffzufuhr erst bei einer Wiedereinsetzdrehzahl von höchstens 150, insbesondere höchstens 100 und besonders bevorzugt von höchstens 50 min⁻¹ oberhalb der Leerlaufdrehzahl wieder zu aktivieren. Abhängig von der Bauart des Verbrennungsmotors (Zylinderzahl, Verdichtung etc.) sowie der Leistung der E-Maschine, kann die Wiedereinsetzdrehzahl sogar auf höchstens 20 min⁻¹ oberhalb der Leerlaufdrehzahl oder sogar auf bis die Leerlaufdrehzahl abgesenkt werden.

Zwar ist im Rahmen des erfindungsgemäßen Konzepts entsprechend bekannter Strategien möglich, die Leerlaufdrehzahl und/oder die Wiedereinsetzungsdrehzahl, insbesondere in äquidistanter Weise, in Abhängigkeit von der Temperatur des Verbrennungsmotors (beziehungsweise seiner Kühlmitteltemperatur) derart vorzugeben, dass mit niedrigeren Motortemperaturen höhere Leerlauf- und/oder Wiedereinsetzdrehzahlen vorgegeben werden. Demgegenüber sieht eine bevorzugte Ausgestaltung der Erfindung jedoch vor, die Leerlauf- und /oder die Wiedereinsetzdrehzahl unabhängig von der Temperatur des Verbrennungsmotors vorzugeben, wodurch sich eine weitere Verringerung des Kraftstoffverbrauchs erzielen lässt. Diese Ausführung wird insbesondere bei besonders leistungsfähigen Elektromotoren realisiert. Selbstverständlich ist auch denkbar, die Drehzahlschwellen zwar temperaturabhängig vorzugeben, hierbei jedoch geringere temperaturabhängige Verschiebungen als bei herkömmlichen Konzepten vorzusehen.

Wie oben bereits angedeutet, wird das Drehmoment des Elektromotors vorteilhaft genutzt , um den Drehzahlabfall des Verbrennungsmotors abzubremsen und/oder anschließend den Verbrennungsmotor auf seine Leerlaufdrehzahl einzustellen. Dafür wird der Elektromotor vor, mit oder nach der Wiedereinsetzung der Kraftstoffzufuhr aktiviert und das elektromotorische Drehmoment dem Verbrennungsmotor, insbesondere seiner Kurbelwelle, aufgeprägt. Nach einer weiteren Ausführung der Erfindung wird das Drehmoment des Elektromotors ferner genutzt, um einen Aufbau einer so genannten Momentenreserve des Verbrennungsmotors im Leerlauf zu unterstützen. Dabei wird die Momentenreserve durch einen erhöhten Zylinderfüllstand des Verbrennungsmotors aufgebaut und durch eine wirkungsgradmindernde Maßnahme, insbesondere durch eine Zündwinkelspätverstellung, kompensiert. Eine solche Momentenreserve wird für den Fall einer schnellen positiven Momentenanforderung, beispielsweise für eine Fahrzeugbeschleunigung, vorgehalten und kann im Bedarfsfall durch eine schnell realisierbare Zündwinkelvorverstellung freigesetzt werden. Nach einer alternativen, noch stärker bevorzugten Ausführung der Erfindung, erfolgt der Leerlaufbetrieb des Verbrennungsmotors nach Wiedereinsetzung der Kraftstoffzufuhr im Schubbetrieb jedoch ohne Aufbau einer Momentenreserve. Dies bedeutet, dass der Zylinderfüllstand des Verbrennungsmotors wirkungsgradoptimiert genau auf das zur Einstellung der Leerlaufdrehzahl notwendige Drehmoment eingestellt wird. Im Falle einer plötzlichen Momentenanforderung durch den Fahrer wird dieses dann durch den Elektromotor zumindest teilweise zur Verfügung gestellt. Durch den Verzicht auf eine Momentenreserve im Leerlaufbetrieb einer Schubphase lässt sich eine weitere Absenkung des Kraftstoffverbrauchs realisieren.

Nach einer weiteren vorteilhaften Ausgestaltung des Verfahrens wird das unterstützende Drehmoment des Elektromotors erst und nur dann aktiviert, wenn die Drehzahl des Verbrennungsmotors eine zulässige untere Drehzahlschwelle unterhalb der Wiedereinsetzdrehzahl, insbesondere unterhalb der Leerlaufdrehzahl, unterschreitet. Alternativ kann auch der Drehzahlverlauf des Verbrennungsmotors, insbesondere die Steilheit des Drehzahlabfalls, verfolgt und mit einem Soll-Drehzahlverlauf verglichen werden und das elektromotorische Drehmoment erst aktiviert werden, wenn eine Differenz zwischen Ist- und Soll-Drehzahlverlauf einen vorgegebenen Differenzschwellenwert überschreitet. Auf diese Weise kann in vielen Fällen auf eine Aktivierung des Elektromotors zum Abfangen des Verbrennungsmotors vollständig verzichtet werden. Diese Vorgehensweise hat den Vorteil, dass die aus einem elektrischen Energiespeicher für den E-Motor zu entnehmende Energie auf ein Minimum begrenzt wird. Diese Verfahrensführung bietet sich somit besonders bei Energiespeichern relativ geringer Kapazität oder bei aktuell geringen Ladungsgraden der Speicher an.

Nach der Erfindung werden zur Abbremsung des Verbrennungsmotors und/oder zu seiner Einstellung auf die Leerlaufdrehzahl alternierend positive und negative Drehmomente des Elektromotors dem Verbrennungsmotor beziehungsweise seiner Kurbelwelle aufgeprägt. Dieser alternierende Betrieb des Elektromotors wird vorzugsweise bereits kurz vor Wiedereinsetzen der Kraftstoffzufuhr des Verbrennungsmotors aktiviert. Auf diese Weise wird der Momentenaufbau des Verbrennungsmotors durch die wechselweise elektromotorische Beaufschlagung mit positiven und negativen Momenten gedämpft. Das Ergebnis ist ein sehr "weiches" und komfortoptimiertes Wiedereinsetzen, das praktisch unbemerkt vom Fahrer erfolgt. Diese Vorgehensweise wird insbesondere dann realisiert, wenn das Wiedereinsetzen bei eingelegter Gangstufe des Handschalt- oder Automatikgetriebes (und geschlossener Kupplung) erfolgt, da hierdurch unerwünschte Beschleunigungen beziehungsweise Verringerungen der Fahrzeugverzögerung durch den Momentenaufbau des Verbrennungsmotors unterdrückt werden können.

Die Erfindung betrifft ferner ein Hybridfahrzeug mit einem Verbrennungsmotor und zusätzlich mindestens einem Elektromotor. Das fahrzeug weist eine Schubabschaltungssteuerung auf, die eingerichtet ist, das vorstehend beschriebene Verfahren durchzuführen, insbesondere die Wiedereinsetzung der Kraftstoffzufuhr zumindest bei betriebswarmem Verbrennungsmotor bei einer Wiedereinsetzdrehzahl von höchstens 200 min⁻¹ oberhalb der Leerlaufdrehzahl des Verbrennungsmotors zu bewirken.

Die erfindungsgemäße Schubabschaltungssteuerung umfasst einen Programmalgorithmus zur Steuerung der erforderlichen Verfahrensschritte, wobei der Programmalgorithmus in einer allgemeinen Motorsteuerung oder einer separaten Steuereinheit hinterlegt sein kann.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: schematisch den Aufbau einer erfindungsgemäßen Hybridantriebseinheit;
- Figur 2: zeitliche Verläufe verschiedener Kenngrößen während einer Schubabschaltung eines Hybridfahrzeugs gemäß Stand der Technik und gemäß der vorliegenden Erfindung und
- Figur 3: ein Ablaufdiagramm zur Durchführung der erfindungsgemäßen Schubabschältung.

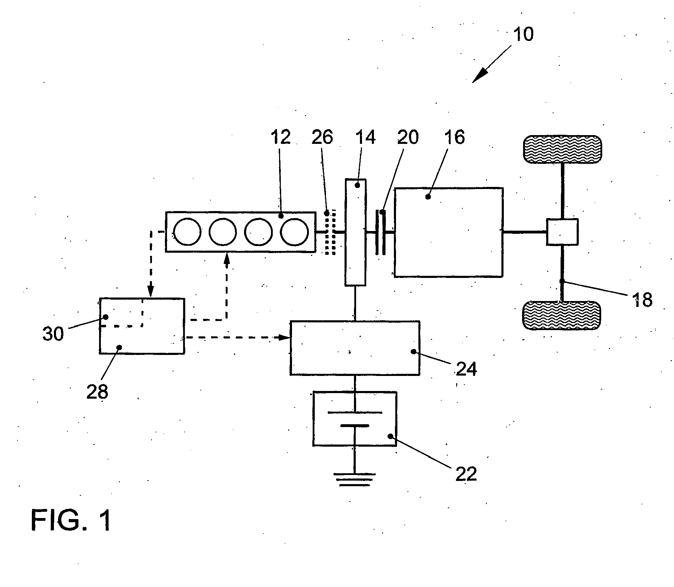

In Figur 1 ist mit 10 insgesamt eine parallele Hybridantriebseinheit eines im Einzelnen nicht weiter dargestellten Hybridfahrzeugs bezeichnet. Der Antrieb des Fahrzeugs erfolgt wahlweise oder gleichzeitig durch einen konventionellen Verbrennungsmotor 12 (Otto- oder Dieselmotor) sowie einen Elektromotor 14, die beide auf die gleiche Welle wirken, insbesondere auf die Kurbelwelle des Verbrennungsmotors 12. Die Anbindung des Elektromotors 14 an die Motorkurbelwelle kann auf verschiedene Weise erfolgen. So kann der Elektromotor 14 direkt oder über eine Kupplung mit der Kurbelwelle verbunden sein oder über einen Riemenantrieb, einen Zahnriemen, ein Getriebe oder einer anderen kraft- und/oder formschlüssigen Verbindung. Verbrennungsmotor 12 und Elektromotor 14 sind über ein Getriebe 16, insbesondere ein manuell betätigtes Handschaltgetriebe, mit einem angedeuteten Antriebsstrang 18 verbunden. Die Entkopplung der Antriebswellen des Verbrennungsmotors 12 beziehungsweise des Elektromotors 14 vom Getriebe 16 erfolgt über eine Kupplung 20, die durch Betätigung eines nicht dargestellten Kupplungspedals durch den Fahrer geöffnet werden kann und bei Nicht-Betätigung geschlossen ist.

Der Elektromotor 14, der beispielsweise ein Drehstrom-Asynchronmotor oder -Synchronmotor ist, kann wahlweise im Motor- oder Generatorbetrieb betrieben werden. Im motorischen Betrieb treibt der Elektromotor 14 den Antriebsstrang 18 unter Verbrauch von elektrischer Energie (Strom) an. Diese bezieht der Elektromotor 14 aus einem Energiespeicher 22, der beispielsweise eine Batterie und/oder ein Kondensatorspeicher sein kann. Zusätzlich kann der Motorbetrieb des Elektromotors 14 den angeschalteten Verbrennungsmotor 12 unterstützen. Im generatorischen Betrieb hingegen wird der Elektromotor 14 durch den Verbrennungsmotor 12 beziehungsweise einen Schub des fahrzeuges angetrieben und wandelt die kinetische Energie in elektrische Energie zur Auffüllung des Energiespeichers 22 um. Die Umschaltung des Elektromotors 14 zwischen Motor- und Generatorbetrieb erfolgt durch eine Leistungselektronik 24, die gleichzeitig eine möglicherweise erforderliche Umrichtung zwischen Gleich- und Wechselstrom vornimmt.

Gemäß dem dargestellten Konzept erfolgt der Fahrzeugantrieb überwiegend durch den Verbrennungsmotor 12, der durch den als Startergenerator ausgelegten Elektromotor 14 gestartet wird. Der Elektromotor 14 übernimmt zudem eine Boostfunktion, indem er in Hochlastsituationen, insbesondere bei Beschleunigungen des Fahrzeugs, unterstützend zum Fahrzeugantrieb zugeschaltet wird (motorischer Betrieb). Andererseits hat der Elektromotor 14 in Fahrsituationen, bei denen ein Überschuss kinetischer Energie des Fahrzeugs vorliegt, eine so genannte Rekuperationsfunktion, indem er im generatorischen Betrieb die Bewegungsenergie in kinetische Energie zur Ladung des Energiespeichers 22 umwandelt und somit gleichzeitig ein Bremsmoment bereitstellt. Ein in diesem Zusammenhang besonders geeigneter Elektromotor 14 weist eine Leistung von höchstens 40 kW, insbesondere von höchstens 20 kW, vorzugsweise im Bereich von 8 bis 15 kW, speziell von etwa 13 kW auf.

In Figur 1 ist zudem eine optionale zusätzliche Kupplung 26 angedeutet, die zwischen Verbrennungsmotor 12 und Elektromotor 14 angeordnet sein kann. Eine solche zusätzliche Kupplung 26 erlaubt die separate Abkopplung des Verbrennungsmotors 12 vom Antriebsstrang 18 beziehungsweise vom Elektromotor 14, wodurch sich grundsätzlich der Vorteil ergibt, dass bei ausgeschaltetem Verbrennungsmotor 12 seine mechanischen Reibungswiderstände nicht mitgeschleppt werden müssen. Die zusätzliche Kupplung 26 bewirkt daher zwar ein zusätzliches Einsparpotential von Kraftstoff, ist jedoch mit einem erheblichen Kosten-, Konstruktions- und Bauraumaufwand verbunden. Im Rahmen der vorliegenden Erfindung ist aus diesem Grund die zusätzliche Kupplung 26 zwischen Verbrennungsmotor 12 und Elektromotor 14 zwar grundsätzlich denkbar, bevorzugt jedoch nicht vorgesehen.

Die Steuerung des Betriebes des Verbrennungsmotors 12 sowie der Leistungselektronik 24 erfolgt durch ein Motorsteuergerät 28, in welches eine Schubabschaltungssteuerung angedeutet mit 30) in Form eines Programmalgorithmus integriert ist. Alternativ kann die Schubabschaltungssteuerung 30 auch in einer separaten Steuereinheit vorgesehen sein.

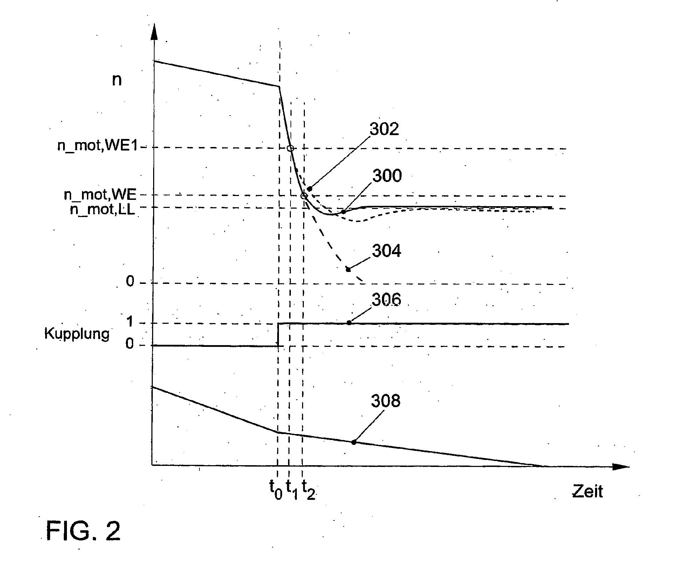

In Figur 2 sind die zeitlichen Verläufe von Motordrehzahl n des Verbrennungsmotors 12 (Kurven 300, 302 und 304), Zustand der Kupplung 20 (Kurve 306), sowie fahrzeuggeschwindigkeit (Kurve 308) während einer Schubabschaltung dargestellt. Dabei zeigt die Kurve 300 den Drehzahlverlauf gemäß der erfindungsgemäßen Verfahrensführung, Kurve 302 den Drehzahlverlauf gemäß Stand der Technik bei ordnungsgemäß verlaufender und Kurve 304 bei zu spät erfolgender Wiedereinsetzung der Kraftstoffzufuhr.

Zunächst befindet sich das fahrzeug bei geschossener Kupplung 20 (Kupplung = 0) in einer Verzögerungsphase, in der der Fahrer das Fahrpedal loslässt ("vom Gas geht"), um das Fahrzeug allmählich zu verzögern. In dieser Situation tritt die Motorbremse in Kraft, wobei sich die Fahrzeuggeschwindigkeit vFzg verringert und die Motordrehzahl n entsprechend der Antriebsstrangübersetzung, abfällt. Es liegt ein Schubbetrieb (Schiebebetrieb) vor, in dem sowohl gemäß dem herkömmlichen Verfahren (Kurve 302) als auch gemäß der vorliegenden Erfindung (Kurve 300) eine Schubabschaltung des Verbrennungsmotors 12 erfolgt, das heißt eine Unterbrechung der Kraftstoffzufuhr, um Kraftstoff zu sparren. Zusätzlich kann auch noch die zündung unterbrochen werden. Zum Zeitpunkt t₀ öffnet der Fahrer durch Treten des Kupplungspedals die Kupplung 20. Dadurch wird der Verbrennungsmotor 12 vom Triebstrang 18 getrennt und somit die Motorbremse gelöst, weswegen die Fahrzeugverzögerung langsamer wird, die Motordrehzahl n aber sehr schnell abfällt.

-Gemäß dem herkömmlichen Verfahren setzt zum Zeitpunkt t₁, wenn nämlich die Motordrehzahl n eine herkömmliche Wiedereinsetzdrehzahl n_mot,WE1 erreicht, die Kraftstoffeinspritzung wieder ein, um den Motor 12 im Leerlaufbetrieb bei der Leerlaufdrehzahl n_mot,LL einzuregeln. Die Wiedereinsetzdrehzahl n_mot,WE1 liegt dabei typischerweise bei mindestens 300 bis 400 min⁻¹ oberhalb der Leerlaufdrehzahl n_mot,LL. Der Leerlaufbetrieb ermöglicht die Widerbeschleunigung des Fahrzeugs nach einem Einkuppelvorgang und Synchronisation der Drehzahl durch den Fahrer. Zusätzlich erfolgt in herkömmlichen Konzepten im Leerlaufbetrieb ein Aufbau einer Momentenreserve, indem die Zylinderfüllung des Verbrennungsmotors 12, das heißt die dem Verbrennungsmotor 12 zugeführte Luftmenge und entsprechend die Kraftstoffmenge, angehoben wird und das hierdurch potentiell erzeugte zusätzliche Drehmoment durch Spätverschiebung des Zündzeitpunktes kompensiert wird. Die hierbei eingestellte Zylinderfüllung übersteigt somit die Füllung, die für den bloßen Leerlaufbetrieb notwendig ist. Die Momentenreserve wird im Fall eines plötzlich angeforderten hohen Drehmoments mobilisiert, indem der Zündwinkel wieder in Richtung früh, insbesondere auf einen wirkungsgradoptimierten Zündwinkel verlagert wird.

Die frühzeitige Abfangung des Verbrennungsmotors 12 bei der Wiedereinsetzdrehzahl n_mot,WE1 gemäß Stand der Technik ist notwendig, um den Verbrennungsmotor genügend Zeit zum Aufbau des Drehmoments und gegebenenfalls des Reservemoments zu geben und sein "Absterben" zu verhindern. Insbesondere ist die Drehzahlreserve für das Öffnen der Drosselklappe beziehungsweise das Einstellen der erforderlichen Zylinderfüllung erforderlich. Erfolgt die Wiedereinsetzung der Kraftstoffzufuhr zu spät, sinkt die Motordrehzahl n auf 0 null und der Motor stirbt ab (Kurve 304).

Gegenüber dem herkömmlichen Verfahren wird erfindungsgemäß die Wiedereinsetzdrehzahl deutlich abgesenkt, vorzugsweise auf einen Wert, der höchstens 100 min⁻¹ oberhalb der Leerlaufdrehzahl n_mot,LL liegt. Mit der erfindungsgemäß abgesenkten Wiedereinsetzdrehzahl n_mot,WE wird der Wiedereinsetzzeitpunkt deutlich nach hinten verzögert, so dass gemäß Figur 2 die Wiedereinsetzung erst zum Zeitpunkt t₂ erfolgt (Kurve 300). Dabei kann zum Abbremsen des Drehzahlabfalls des Verbrennungsmotors 12 und zu seiner Einstellung auf die Leerlaufdrehzahl n_mot,LL ein Drehmoment des Elektromotors 14 der Motorkurbelwelle aufgeprägt werden. Da E-Motoren insbesondere im unteren Drehzahlbereich ein hohes Drehmoment (positiv und negativ) bereitstellen und die elektromotorischen Momente sehr schnell (einige zehn ms) auf- und abgebaut werden können, bietet sich in Hybridkonzepten die Möglichkeit, den Wiedereinsetzungsbetrieb des Verbrennungsmotors 12 zu unterstützen. Sobald der Momentenaufbau für den Leerlaufbetrieb abgeschlossen ist, kann das Moment des Elektromotors 4 wieder auf null reduziert werden. Der Verbrennungsmotor 12 wird somit spätmöglichst wiedereingesetzt und in seine Leerlaufdrehzahl überführt. Durch die höheren möglichen Stellmomente können mit dem erfindungsgemäßen Verfahren auch geringfügige Drehzahlunterschwinger und gleichzeitig ein schnelleres Einstellen der Soll-Leerlaufdrehzahl erreicht werden. Idealerweise werden Drehzahlunterschwinger in dieser Betriebsphase vollständig vermieden.

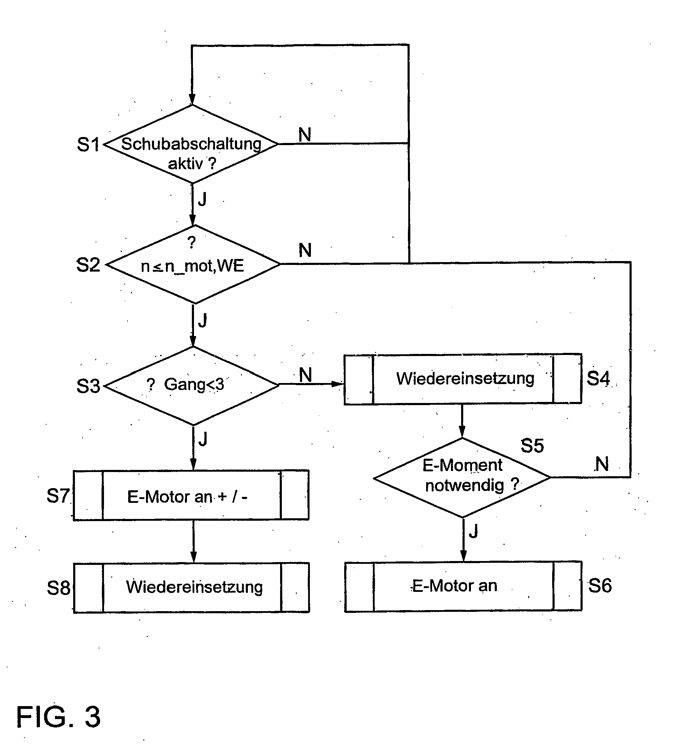

Details der erfindungsgemäßen Verfahrensführung werden aus Figur 3 ersichtlich. Das Verfahren startet in Schritt S1 mit einer Abfrage nach der Aktivierung der Schubabschaltung. Wird diese Frage mit ja beantwortet, das heißt ein Schubbetrieb des Fahrzeugs liegt vor und die Kraftstoffzuführung zum Verbrennungsmotor 12 ist unterbrochen, geht das Verfahren zu Schritt S2 über, wo überprüft wird, ob die Drehzahl n des Verbrennungsmotors 12 die Wiedereinsetzdrehzahl n_mot,WE erreicht oder unterschritten hat. Wird auch diese Abfrage mit ja beantwortet, liegen die Vorraussetzungen für eine Wiedereinsetzung des Verbrennungsmotors 12 vor.

Bevor jedoch die Kraftstoffzufuhr wieder eingeleitet wird, erfolgt in Schritt S3 eine Überprüfung, ob kein oder ein niedriger eingelegter Gang des Getriebes 16, beispielsweise der erste, zweite oder der Rückwärtsgang, bei geschlossener Kupplung 20 vorliegt. Wird die Abfrage in Schritt S3 verneint, das heißt, es ist bei geschlossener Kupplung 20 ein relativ hoher Gang (z.B. dritter Gang oder höher) eingelegt, erfolgt unmittelbar in Schritt S4 die Wiedereinsetzung der Kraftstoffeinspritzung des Verbrennungsmotors 12 und damit verbunden die Einsetzung der Leerlaufregelung. Da gemäß dem dargestellten Ausführungsbeispiel nach Möglichkeit auf eine Aktivierung des Elektromotors 12 verzichtet werden soll, geht das Verfahren zu Schritt S5 über, wo überprüft wird, ob die Bereitstellung eines elektromotorischen Drehmomentes zum "Abfangen" des Drehzahlabfalls des Verbrennungsmotors 12 notwendig ist. Die Überprüfung kann beispielsweise darin bestehen, dass überprüft wird, ob die Motordrehzahl n unter einer vorgegebenen unteren Drehzahlschwelle, die beispielsweise knapp unterhalb der Lehrlaufdrehzahl n_mot,LL liegt, abgefallen ist. Alternativ oder zusätzlich kann in Schritt S5 der Verlauf des Drehzahlabfalls überprüft werden. Ist beispielsweise eine Steilheit des Drehzahlabfalls höher als ein entsprechender Sollwert, kann dies bedeuten, dass ein Absterben des Verbrennungsmotors 12 nur durch die elektromotorische Unterstützung des E-Motors 14 verhindert werden kann. In diesem Fall geht das Verfahren zu Schritt S6, in dem der Elektromotor aktiviert wird und ein positives elektromotorisches Moment dem Verbrennungsmotor 12 aufgeprägt wird.

Wird auf der anderen Seite die Abfrage in Schritt S3 bejaht, das heißt, es ist kein oder nur ein niedriger Gang eingelegt, erfolgt zunächst in Schritt S7 die Aktivierung des Elektromotor 14 in einem alternierenden Betrieb, indem er wechselweise ein positives und negatives Drehmoment der Kurbelwelle des Verbrennungsmotors 12 aufprägt. Auf diese Weise kann die anschließend in Schritt S8 erfolgende Wiedereinsetzung gedämpft werden, so dass ein besonders komfortoptimierter weicher Übergang in den verbrennungsmotorischen Zugbetrieb erfolgt. Insbesondere wird der Fahrer somit nicht durch einen positiven Momentensprung im Fahrkomfort beeinträchtigt, was insbesondere durch die relativ hohe Triebstrangübersetzung gegeben sein kann. Andererseits wird hierbei bei geöffneter Kupplung 20 durch die parallele Aktivierung der E-Maschine 14 ein "Absterben" des Verbrennungsmotors 12 sicher vermieden.

### Bezugszeichenliste

- 10: Hybridantriebseinheit
- 12: Verbrennungsmotor
- 14: Elektromotor
- 16: Getriebe
- 18: Antriebsstrang
- 20: Kupplung
- 22: Energiespeicher / Batterie
- 24: Leistungselektronik
- 26: zusätzliche Kupplung
- 28: Motorsteuergerät
- 30: Schubabschaltungssteuerung

## Patentansprüche

1. Verfahren zur Steuerung eines Schubbetriebs eines Hybridfahrzeugs mit einem Verbrennungsmotor (12) und zusätzlich mindestens einem Elektromotor (14) sowie einer Schubabschaltung, die bei Vorliegen eines Schubbetriebs des Fahrzeugs eine Unterbrechung einer Kraftstoffzufuhr des Verbrennungsmotors (12) bewirkt und bei Erreichen oder Unterschreiten einer Wiedereinsetzdrehzahl (n_mot,WE) des Verbrennungsmotors (12) eine Wiedereinsetzung der Kraftstoffzufuhr bewirkt, wobei zumindest bei betriebswarmen Verbrennungsmotor (12) die Wiedereinsetzung der Kraftstoffzufuhr bei einer Wiedereinsetzdrehzahl (n_mot,WE) von höchstens 200 min-1 oberhalb einer Leerlaufdrehzahl (n_mot,LL) des Verbrennungsmotors (12) erfolgt und wobei vor, mit oder nach der Wiedereinsetzung der Kraftstoffzufuhr des Verbrennungsmotors (12) ein Drehmoment des Elektromotors (14) zur Abbremsung des Verbrennungsmotors (12) und/oder zur Einstellung des Verbrennungsmotors (12) auf die Leerlaufdrehzahl (n_mot,LL) unterstützend dem Verbrennungsmotor (12) aufgeprägt wird,
**dadurch gekennzeichnet, dass**
zur Abbremsung des Verbrennungsmotors (12) und/oder zur Einstellung des Verbrennungsmotors (12) auf die Leerlaufdrehzahl (n_mot,LL) alternierend positive und negative Drehmomente des Elektromotors (14) dem Verbrennungsmotor (12) aufgeprägt werden.

2. Verfahren nach Anspruch 1,
**dadurch gekennzeichnet, dass**
zumindest bei betriebswarmen Verbrennungsmotor (12) die Wiedereinsetzung der Kraftstoffzufuhr bei einer Wiedereinsetzdrehzahl (n_mot,WE) von höchstens 150 min-1, insbesondere von höchstens 100 min-1, vorzugsweise von höchstens 50 min 1 oberhalb der Leerlaufdrehzahl (n_mot,LL) erfolgt.

3. Verfahren nach Anspruch 1 oder 2,
**dadurch gekennzeichnet, dass**
zumindest bei betriebswarmen Verbrennungsmotor (12) die Wiedereinsetzung der Kraftstoffzufuhr bei einer Wiedereinsetzdrehzahl (n_mot,WE) von höchstens 20 min-1 oberhalb der Leerlaufdrehzahl (n_mot,LL), insbesondere bei Erreichen der Leerlaufdrehzahl (n_mot,LL) erfolgt.

4. Verfahren nach einem der vorhergehenden Ansprüche,
**dadurch gekennzeichnet, dass**
die Leerlaufdrehzahl (n_mot,LL) und/oder die Wiedereinsetzdrehzahl (n_mot,WE) unabhängig von einer Temperatur des Verbrennungsmotors (12) vorgegeben wird.

5. Verfahren nach einem der Ansprüche 1 bis 4,
**dadurch gekennzeichnet, dass**
das Drehmoment des Elektromotors (14) zum Aufbau einer nicht an die Kurbelwelle abgegebenen Momentenreserve des Verbrennungsmotors (12) im Leerlaufbetrieb dem Verbrennungsmotor (12) aufgeprägt wird.

6. Verfahren nach einem der Ansprüche 1 bis 4,
**dadurch gekennzeichnet, dass**
nach Wiedereinsetzung der Kraftstoffzufuhr ein Drehmoment des Verbrennungsmotors (12) wirkungsgradoptimiert auf das zur Einstellung der Leerlaufdrehzahl (n_mot,LL) erforderliche Drehmoment ohne Aufbau einer Momentenreserve eingestellt wird.

7. Verfahren nach einem der Ansprüche 1 bis 6,
**dadurch gekennzeichnet, dass**
das unterstützende Drehmoment des Elektromotors (14) erst und nur dann aktiviert wird, wenn die Drehzahl (n) des Verbrennungsmotors (12) eine zulässige untere Drehzahlschwelle (n_mot,min), die kleiner oder gleich der Wiedereinsetzdrehzahl (n_mot,WE) ist, insbesondere kleiner als die Leerlaufdrehzahl (n_mot,LL) ist, unterschreitet.

8. Verfahren nach einem der Ansprüche 1 bis 6,
**dadurch gekennzeichnet, dass**
das unterstützende Drehmoment des Elektromotors (14) erst und nur dann aktiviert wird, wenn eine Differenz eines Ist-Drehzahlverlaufs und eines Soll-Drehzahlverlaufs einen Differenzschwellenwert überschreitet.

9. Verfahren nach einem der vorhergehenden Ansprüche,
**dadurch gekennzeichnet, dass**
die Aufprägung der alternierenden positiven und negativen Drehmomente des Elektromotors (14) bereits vor Wiedereinsetzen der Kraftstoffzufuhr des Verbrennungsmotors (12) einsetzt.

10. Hybridfahrzeug mit einem Verbrennungsmotor (12) und zusätzlich mindestens einem Elektromotor (14) sowie einer Schubabschaltungssteuerung (30), die eingerichtet ist, bei Vorliegen eines Schubbetriebs des Fahrzeugs eine Unterbrechung einer Kraftstoffzufuhr des Verbrennungsmotors (12) zu bewirken und bei Erreichen oder Unterschreiten einer Wiedereinsetzdrehzahl (n_mot,WE) des Verbrennungsmotors (12) eine Wiedereinsetzung der Kraftstoffzufuhr zu bewirken, wobei zumindest bei betriebswarmen Verbrennungsmotor (12) die Wiedereinsetzung der Kraftstoffzufuhr bei einer Wiedereinsetzdrehzahl (n_mot,WE) von höchstens 200 min-1 oberhalb einer Leerlaufdrehzahl (n_mot,LL) des Verbrennungsmotors (12) erfolgt und wobei vor, mit oder nach der Wiedereinsetzung der Kraftstoffzufuhr des Verbrennungsmotors (12) ein Drehmoment des Elektromotors (14) zur Abbremsung des Verbrennungsmotors (12) und/oder zur Einstellung des Verbrennungsmotors (12) auf die Leerlaufdrehzahl (n_mot,LL) unterstützend dem Verbrennungsmotor (12) aufgeprägt wird,
**dadurch gekennzeichnet, dass**
die Schubabschaltungssteuerung (30) eingerichtet ist, zur Abbremsung des Verbrennungsmotors (12) und/oder zur Einstellung des Verbrennungsmotors (12) auf die Leerlaufdrehzahl (n_mot,LL) alternierend positive und negative Drehmomente des Elektromotors (14) dem Verbrennungsmotor (12) aufzuprägen.

11. Hybridfahrzeug nach Anspruch 10,
**dadurch gekennzeichnet, dass**
die Schubabschaltungssteuerung (30) einen Programmalgorithmus umfasst, der insbesondere in einem Motorsteuergerät (28) oder einer separaten Steuereinheit hinterlegt ist.

## Claims

1. Method for controlling an overrun mode of a hybrid vehicle having an internal combustion engine (12) and also having at least one electric motor (14) and also having an overrun fuel cut-off arrangement which interrupts a fuel supply to the internal combustion engine (12) in the presence of an overrun mode of the vehicle and which restores the fuel supply in the event of a restoration rotational speed (n_mot,WE) of the internal combustion engine (12) being reached or undershot, with the restoration of the fuel supply taking place, at least when the internal combustion engine (12) is at operating temperature, at a restoration rotational speed (n_mot,WE) of at most 200 rpm above an idle rotational speed (n_mot,LL) of the internal combustion engine (12), and with a torque of the electric motor (14) for braking the internal combustion engine (12) and/or for adjusting the internal combustion engine (12) to the idle rotational speed (n_mot,LL) being imparted to the internal combustion engine (12) in an assistive manner before, during or after the restoration of the fuel supply to the internal combustion engine (12),
**characterized in that**
alternately positive and negative torques of the electric motor (14) are imparted to the internal combustion engine (12) in order to brake the internal combustion engine (12) and/or in order to adjust the internal combustion engine (12) to the idle rotational speed (n_mot,LL).

2. Method according to Claim 1,
**characterized in that**,
at least when the internal combustion engine (12) is at operating temperature, the restoration of the fuel supply takes place at a restoration rotational speed (n_mot,WE) of at most 150 rpm, in particular of at most 100 rpm, preferably of at most 50 rpm above the idle rotational speed (n_mot,LL).

3. Method according to Claim 1 or 2,
**characterized in that**,
at least when the internal combustion engine (12) is at operating temperature, the restoration of the fuel supply takes place at a restoration rotational speed (n_mot,WE) of at most 20 rpm above the idle rotational speed (n mot,LL), in particular when the idle rotational speed (n_mot,LL) is reached.

4. Method according to one of the preceding claims,
**characterized in that**
the idle rotational speed (n_mot,LL) and/or the restoration rotational speed (n_mot,WE) is predefined independently of a temperature of the internal combustion engine (12).

5. Method according to one of Claims 1 to 4,
**characterized in that**
the torque of the electric motor (14) is imparted to the internal combustion engine (12) to build up a torque reserve, which is not output to the crankshaft, of the internal combustion engine (12) in the idle mode.

6. Method according to one of Claims 1 to 4,
**characterized in that**,
after the restoration of the fuel supply, a torque of the internal combustion engine (12) is adjusted, in an efficiency-optimized manner, to the torque required to set the idle rotational speed (n_mot,LL) without the build-up of a torque reserve.

7. Method according to one of Claims 1 to 6,
**characterized in that**
the assistive torque of the electric motor (14) is activated once, and only when, the rotational speed (n) of the internal combustion engine (12) falls below an admissible lower rotational speed threshold (n_mot,min) which is lower than or equal to the restoration rotational speed (n_mot,WE), in particular lower than the idle rotational speed (n_mot,LL).

8. Method according to one of Claims 1 to 6,
**characterized in that**
the assistive torque of the electric motor (14) is activated once, and only when, a difference between an actual rotational speed profile and a nominal rotational speed profile exceeds a difference threshold value.

9. Method according to one of the preceding claims,
**characterized in that**
the imparting of the alternating positive and negative torques of the electric motor (14) is initiated already before the restoration of the fuel supply to the internal combustion engine (12).

10. Hybrid vehicle having an internal combustion engine (12) and also having at least one electric motor (14) and also having an overrun fuel cut-off controller (30) which is set up so as to interrupt a fuel supply to the internal combustion engine (12) in the presence of an overrun mode of the vehicle and so as to restore the fuel supply in the event of a restoration rotational speed (n_mot, WE) of the internal combustion engine (12) being reached or undershot, with the restoration of the fuel supply taking place, at least when the internal combustion engine (12) is at operating temperature, at a restoration rotational speed (n_mot,WE) of at most 200 rpm above an idle rotational speed (n_mot,LL) of the internal combustion engine (12), and with a torque of the electric motor (14) for braking the internal combustion engine (12) and/or for adjusting the internal combustion engine (12) to the idle rotational speed (n_mot,LL) being imparted to the internal combustion engine (12) in an assistive manner before, during or after the restoration of the fuel supply to the internal combustion engine (12),
**characterized in that**,
the overrun fuel cut-off controller (30) is set up so as to impart alternately positive and negative torques of the electric motor (14) to the internal combustion engine (12) in order to brake the internal combustion engine (12) and/or in order to adjust the internal combustion engine (12) to the idle rotational speed (n_mot,LL).

11. Hybrid vehicle according to Claim 10,
**characterized in that**
the overrun fuel cut-off controller (30) comprises a program algorithm which is stored in particular in an engine control unit (28) or in a separate control unit.

## Revendications

1. Procédé de commande d'un régime de décélération d'un véhicule hybride équipé d'un moteur à combustion interne (12) et en outre d'au moins un moteur électrique (14) ainsi que d'une coupure par poussée qui provoque, en présence d'un régime de décélération du véhicule, une interruption d'amenée de carburant du moteur à combustion interne (12) et, en cas de dépassement ou de non atteinte d'un régime de reprise (n_mot,WE) du moteur à combustion interne (12) provoque une reprise de l'amenée de carburant, la reprise de l'amenée de carburant se produisant pour un régime de reprise (n_mot,WE) de tout au plus 200 tr/min au-dessus d'un régime à vide (n mot,LL) du moteur à combustion interne (12) en cas de moteur à combustion interne (12) chaud au moins et avant, pendant et après la reprise de l'amenée de carburant du moteur à combustion interne (12), un couple du moteur électrique (14) marquant le moteur à combustion interne (12) pour freiner le moteur à combustion interne (12) et/ou pour régler le moteur à combustion interne (12) sur le régime à vide (n_mot,LL) servant de soutien, **caractérisé en ce que** pour freiner le.moteur à combustion interne (12) et/ou pour régler le moteur à combustion interne (12) sur le régime à vide (n_mot,LL), on marque le moteur à combustion interne (12) en alternance avec des couples positifs et négatifs du moteur électrique (14).

2. Procédé selon la revendication 1, **caractérisé en ce qu'**au moins en cas de moteur à combustion interne (12) chaud, à reprise de l'amenée de carburant se produit pour un régime de reprise (n_mot,WE) de tout au plus 150 tr/min, notamment de tout au plus 100 tr/min, de préférence de tout au plus 50 tr/min au-dessus du régime à vide (n_mot,LL).

3. Procédé selon la revendication 1 ou 2, **caractérisé en ce qu'**au moins en cas de moteur à combustion interne (12) chaud, la reprise de l'amenée de carburant se produit à un régime de reprise (n_mot,WE) de tout au plus 20 tr/min au-dessus du régime à vide (n_mot,LL), notamment lorsque le régime à vide (n_mot,LL) est atteint.

4. Procédé selon l'une quelconque des revendications précédentes, **caractérisé en ce que** le régime à vide (n_mot,LL) et/ou le régime de reprise (n_mot,WE) sont prédéfinis indépendamment d'une température du moteur à combustion interne (12).

5. Procédé selon l'une quelconque des revendications 1 à 4, **caractérisé en ce qu'**au régime à vide, le couple du moteur électrique (14) marque le moteur à combustion interne (12) pour constituer une réserve de couple du moteur à combustion interne (12) ne provenant pas du vilebrequin.

6. Procédé selon l'une quelconque des revendications 1 à 4, **caractérisé en ce qu'**après la reprise de l'amenée de carburant, un couple du moteur à combustion interne (12) est optimisé quant à son degré d'efficacité pour atteindre Le couple nécessaire au réglage du régime à vide (n_mot,LL) sans constituer de réserve de couple.

7. Procédé selon l'une quelconque des revendications 1 à 6, **caractérisé en ce que** le couple du moteur électrique (14) servant de soutien n'est activé que lorsque le régime (n) du moteur à combustion interne (12) passe en dessous d'un seuil de régime inférieur (n_mot,min) autorisé inférieur ou égal au régime de reprise (n_mot,ME), notamment inférieur au régime à vide (n_mot,LL).

8. Procédé selon l'une quelconque des revendications 1 à 6, **caractérisé en ce que** le couple du moteur électrique (14) servant de soutien n'est activé que lorsqu'une différence d'une courbe de régime réel et d'une courbe de régime de consigne dépasse une différence de valeur seuil.

9. Procédé selon l'une quelconque des revendications précédentes, **caractérisé en ce que** le marquage des couples en alternance positifs et négatifs du moteur électrique (14) est déjà utilisé avant la reprise de l'amenée de carburant du moteur à combustion interne (12).

10. Véhicule hybride équipé d'un moteur à combustion interne (12) et en outre d'au moins un moteur électrique (14) ainsi que d'une commande de coupure par poussée (30) prévue, en présence d'un régime de décélération du véhicule, pour provoquer une interruption d'une amenée de carburant du moteur à combustion interne (12) et, en cas de dépassement ou de non atteinte d'un régime de reprise d'un régime de reprise (n_mot,WE) du moteur à combustion interne (12), provoque une reprise de l'amenée de carburant, au moins en cas de moteur à combustion interne (12) chaud, la reprise de l'amenée de carburant en cas de régime de reprise (n_mot, WE) se produisant tout au plus 200 tr/min au-dessus d'un régime à vide (n_mot,LL) du moteur à combustion interne (12) et avant, pendant et après la reprise de l'amenée de carburant du moteur à combustion interne (12), un couple du moteur électrique (14) marquant le moteur à combustion interne (12) pour freiner le moteur à combustion interne (12) et/ou pour régler le moteur à combustion interne (12) sur le régime à vide (n_mot,LL) servant de soutien, **caractérisé en ce que** la commande de coupure par poussée (30) est réalisée pour marquer le moteur à combustion interne (12) avec des couples du moteur électrique (14) en alternance positifs et négatifs pour atteindre le régime à vide (n_mot,LL), pour freiner le moteur à combustion interne (12) et/ou pour régler le moteur à combustion interne (12).

11. Véhicule hybride selon la revendication 10, **caractérisé en ce que** la commande de coupure par poussée (30) comprend un algorithme de programmation qui est mémorisé notamment dans un appareil de commande du moteur (28) ou dans une unité de commande séparée.
